# FASCICULE DE BREVET EUROPEEN

(11) **EP 3 224 141 B1**
(45) Date de publication et mention de la délivrance du brevet: **25.09.2019**
(21) Numéro de dépôt: 15817948.1
(22) Date de dépôt: 24.11.2015
(51) Int. Cl.: B64D 27/24, B64D 35/08, F02C 7/32

(54) **GROUPE PROPULSEUR À MOYENS D'ACCOUPLEMENT SÉLECTIF**
ANTRIEBSEINHEIT MIT MITTELN ZU SELEKTIVEN KOPPLUNG
DRIVE UNIT COMPRISING MEANS FOR SELECTIVE COUPLING

(30) Priorité: 27.11.2014 FR 1461585
(43) Date de publication de la demande: 04.10.2017
(73) Titulaire: Safran Helicopter Engines, 64510 Bordes (FR)
(72) Inventeur: LAFARGUE, Olivier, 64530 Pontacq (FR); CHARTRAIN, Didier, 64420 Gomer (FR); SERGHINE, Camel, 64510 Boeil-Bezing (FR)
(74) Mandataire: Brevalex
(86) Numéro de dépôt international: PCT/FR2015/053180
(87) Numéro de publication internationale: WO 2016/083720

(56) Documents cités:
- EP-A2- 2 128 389
- EP-A2- 2 226 487
- WO-A1-2014/131914

## Description

### DOMAINE TECHNIQUE

L'invention concerne un groupe propulseur tel qu'un turbopropulseur, qui est réalisé de manière à limiter sa consommation en carburant, notamment lors d'étapes de roulage de l'aéronef sur lequel le groupe propulseur est monté.

### ÉTAT DE LA TECHNIQUE ANTÉRIEURE

L'étape pendant laquelle un aéronef se déplace ou est en attente dans un aéroport, avant ou après le décollage, est appelée étape de roulage ou communément étape "taxi".

La durée de cette étape est en général de 10 à 20 minutes, selon la taille de l'aéroport.

Un turbopropulseur conventionnel comporte principalement une turbomachine produisant de l'énergie motrice et une hélice extérieure entrainée par la turbomachine qui permet à l'aéronef de se déplacer.

Lors d'une étape de roulage, la turbomachine est en fonctionnement permanent, que ce soit lorsque l'aéronef se déplace ou bien pendant des étapes d'attente, par exemple lors d'une attente de décollage.

Ainsi, lors de cette étape de roulage, une quantité de carburant importante est consommée, tandis que les besoins en énergie provenant de la turbomachine sont limités.

A titre d'exemple, pour un aéronef d'environ 70 places, la quantité de carburant consommée peut dépasser 50 kilogrammes pour une étape de roulage supérieure à 10 minutes. Lors de ce fonctionnement au sol du groupe turbopropulseur, la turbomachine consomme du carburant et produit des gaz d'échappement. La vitesse de l'avion étant très faible, le panache des gaz d'échappements est peu dilué par l'air environnant. Les gaz d'échappement sont ensuite diffusés sur l'ensemble de la plateforme aéroportuaire, au détriment du personnel qui y travaille et des passagers.

Aussi, le régime de la turbomachine est plus défini par des paramètres de fonctionnement de celle-ci plutôt qu'en fonction de la puissance nécessaire aux étapes de roulage/arrêt. Il en résulte une utilisation intensive de la manette des gaz et des freins. Cette utilisation se traduit par un désagrément de conduite pour le pilote et par un inconfort pour les passagers.

Le document EP 2 226 487 A2 divulgue un groupe propulseur selon le préambule de la revendication 1. Le document EP 2 128 389 A2 divulgue un autre groupe propulseur pour un aéronef.

### EXPOSÉ DE L'INVENTION

L'invention propose un groupe propulseur, notamment pour un aéronef, selon la revendication 1 et comportant une turbomachine une hélice apte à être accouplée de manière sélective avec ladite turbomachine une machine électrique tournante apte à entrainer au moins la turbomachine, et des moyens d'accouplement sélectif de la machine électrique tournante avec l'hélice et/ou la turbomachine, qui sont aptes à accoupler uniquement l'hélice avec la machine électrique tournante lors d'une étape de fonctionnement définie du groupe propulseur, dans lequel la turbomachine consiste en un turbomoteur à turbine libre, comportant un générateur de gaz et une turbine libre entraînée en rotation par le flux de gaz généré par le générateur de gaz, les moyens d'accouplement sélectifs étant aptes à accoupler, ou non, la machine électrique tournante avec le générateur de gaz et/ou la turbine libre.

L'accouplement direct, et unique de la machine électrique tournante avec l'hélice permet, lors des étapes de roulage de l'aéronef, de n'utiliser que de l'énergie électrique et uniquement lorsque l'aéronef doit se déplacer. Il n'y a donc pas de consommation lorsque l'aéronef est à l'arrêt et il n'y a pas non plus de production de gaz d'échappement puisque la turbomachine peut être arrêtée.

De préférence, les moyens d'accouplement sélectifs comportent un organe de couplage qui est accouplé en permanence avec la machine électrique tournante et un système d'embrayage permettant l'accouplement sélectif de l'organe de couplage avec l'hélice en fonction de la phase de fonctionnement du groupe propulseur.

De préférence, les moyens d'accouplement comportent un deuxième système d'embrayage permettant l'accouplement sélectif de l'organe de couplage avec le générateur de gaz.

De préférence, l'organe de couplage porte un arbre, qui est apte à être accouplé avec la turbine libre par l'intermédiaire d'un crabot.

De préférence, la machine électrique tournante consiste en un alterno-démarreur, qui est apte à produire une énergie motrice pour entrainer l'hélice et/ou la turbomachine et qui est apte à produire de l'électricité à partir de l'énergie motrice produite par la turbomachine.

De préférence, la machine électrique tournante est raccordée à un accumulateur d'énergie électrique et la machine électrique tournante est apte à prélever de l'électricité ou à alimenter en électricité ledit accumulateur d'énergie.

L'invention propose aussi un procédé de contrôle des moyens d'accouplement d'un groupe propulseur selon la revendication 7 et consistant à commander les moyens d'accouplement pour que l'organe de couplage soit accouplé uniquement avec l'hélice lors d'une étape de roulage de l'aéronef sur une piste et pour que l'organe de couplage soit accouplé avec l'hélice et la turbomachine au moins lors d'une étape de fonctionnement de la turbomachine en régime établi.

De préférence, lors d'une étape de démarrage de la turbomachine suivant ladite étape de roulage, le procédé comporte
- une première phase dans laquelle l'organe de couplage est accouplé simultanément avec l'hélice et le générateur de gaz, et dans laquelle l'organe de couplage est désaccouplé avec la turbine libre ;
- une deuxième phase dans laquelle l'organe de couplage est accouplé uniquement avec le générateur de gaz et dans laquelle l'organe de couplage est désaccouplé de l'hélice et de la turbine libre et
- une troisième phase dans laquelle l'organe de couplage est accouplé simultanément avec l'hélice et la turbine libre, et dans laquelle l'organe de couplage est désaccouplé du générateur de gaz.

De préférence, lors d'une étape de démarrage de la turbomachine, le procédé comporte :
- une phase dans laquelle l'organe de couplage est accouplé avec le générateur de gaz et dans laquelle l'organe de couplage est désaccouplé de l'hélice et de la turbine libre ; et
- une phase dans laquelle l'organe de couplage est accouplé simultanément avec l'hélice et la turbine libre et dans laquelle l'organe de couplage est désaccouplé du générateur de gaz.

### BRÈVE DESCRIPTION DES DESSINS

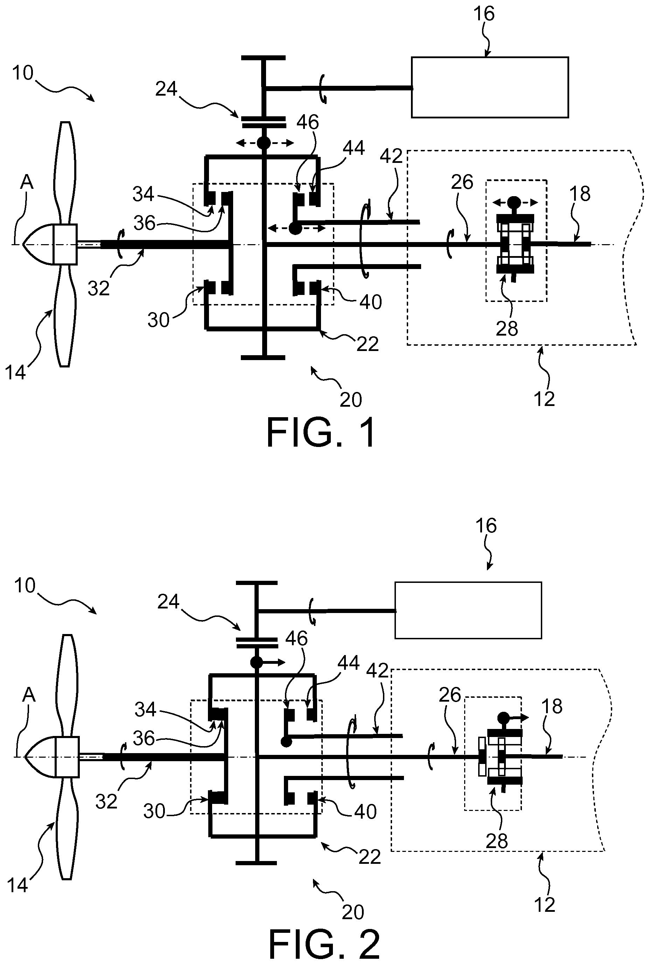

D'autres caractéristiques et avantages de l'invention apparaîtront à la lecture de la description détaillée qui suit pour la compréhension de laquelle on se reportera aux figures annexées parmi lesquelles les figures 1 à 6 sont des représentations schématiques d'un groupe propulseur réalisé selon l'invention, montrant différentes étapes de fonctionnement du groupe propulseur.

### EXPOSÉ DÉTAILLÉ DE MODES DE RÉALISATION PARTICULIERS

On a représenté aux figures un groupe propulseur 10, par exemple pour un aéronef, qui comporte une turbomachine 12 produisant l'énergie motrice du groupe propulseur 10, une hélice 14 qui est destinée à être entrainée par la turbomachine pour la propulsion de l'aéronef, et une machine électrique tournante 16 qui est reliée à un accumulateur d'énergie électrique tel qu'une batterie.

La machine électrique tournante 16 est une machine électrique réversible du type alterno-démarreur. Elle est apte à produire de l'énergie motrice à partir de l'électricité stockée dans la batterie, qui peut être transmis à la turbomachine 12 lorsqu'elle fonctionne en mode démarreur.

La machine électrique tournante 16 est aussi apte à recevoir au moins une partie de l'énergie motrice produite par la turbomachine 12 lorsqu'elle est en mode alternateur, pour produire de l'électricité qui sera redistribuée vers l'ensemble de l'aéronef ainsi que vers la batterie.

La turbomachine 12 est de préférence un turbopropulseur à turbine libre, qui comporte un générateur de gaz constitué d'un ou plusieurs compresseurs et d'une ou plusieurs turbines à un ou plusieurs étages et qui comporte une turbine libre qui entraine un arbre 18 d'entrainement de l'hélice 14.

Un réducteur (non représenté) est disposé entre l'arbre 18 de la turbine et l'hélice 14 pour réduire la vitesse de rotation de l'hélice 14.

Le groupe propulseur 10 comporte aussi des moyens d'accouplement 20 permettant d'accoupler de manière sélective la turbomachine 12, l'hélice 14 et la machine électrique tournante 16 l'un à l'autre.

Les moyens d'accouplement 20 comportent un organe de couplage 22 monté en rotation autour d'un axe principal A, qui est accouplé en permanence avec la machine électrique tournante 16 par l'intermédiaire d'un ensemble d'engrenages 24.

L'organe de couplage 22 comporte un arbre 26 qui est destiné à être accouplé ou non avec l'arbre 18 de la turbine libre par l'intermédiaire d'un crabot 28.

Le crabot 28 est apte à occuper deux états, à savoir un état engagé d'accouplement de l'arbre 26 de l'organe de couplage 22 avec l'arbre 18 de la turbine libre, et un état de désengagé dans lequel il n'accouple pas le deux arbres 26, 18 ensemble. L'état du crabot est apte à être modifié selon la phase de fonctionnement du groupe propulseur, comme on le verra par la suite.

Les moyens d'accouplement 20 comportent un premier système d'embrayage 30 reliant l'organe de couplage 22 avec un arbre 32 porte hélice 14. Le premier système d'embrayage 30 est apte à occuper un état parmi les états embrayé, débrayé et en glissement, pour l'accouplement en rotation, ou non de l'organe de couplage 22 avec l'arbre 32 porte hélice 14.

Le premier système d'embrayage 30 comporte un premier anneau plan 34 solidaire en rotation de l'organe de couplage 22 et un deuxième anneau plan 36 en vis-à-vis solidaire en rotation de l'arbre 32 porte hélice 14. Les deux anneaux plans 34, 36 du premier système d'embrayage 30 sont destinés à venir en contact, ou non, l'un contre l'autre, selon que le premier système d'embrayage est dans l'un de ses états définis ci-dessus.

Les moyens d'accouplement 20 comportent un deuxième système d'embrayage 40 reliant l'organe de couplage 22 avec un arbre 42 du générateur de gaz. Le deuxième système d'embrayage 40 est apte à occuper un état parmi les états embrayé, débrayé et en glissement, pour l'accouplement en rotation, ou non de l'organe de couplage 22 avec l'arbre 42 du générateur de gaz.

Le deuxième système d'embrayage 40 comporte un premier anneau plan 44 solidaire en rotation de l'organe de couplage 22 et un deuxième anneau plan 46 solidaire en rotation de l'arbre 42 de générateur de gaz.

Les deux anneaux plans 44, 46 du deuxième système d'embrayage 40 sont destinés à venir en contact, ou non, l'un contre l'autre, selon que le deuxième système d'embrayage est dans l'un de ses états définis ci-dessus.

Les moyens d'accouplement 20 comportent en outre des moyens de commande et d'entrainement du crabot 28 et des systèmes d'embrayage 30, 40 pour provoquer l'accouplement ou non de la turbomachine 12, de l'hélice 14 et de la machine électrique tournante 16 l'un avec l'autre.

Le groupe propulseur 10 est conçu pour que dans une configuration des moyens d'accouplement 20, la machine électrique tournante 16 est uniquement accouplée avec l'hélice 14. Dans cette configuration des moyens d'accouplement 20, la machine électrique tournante 16 et l'hélice 14 ne sont alors pas accouplées avec le générateur de gaz ni la turbine libre de la turbomachine 12.

Cette configuration des moyens d'accouplement 20 est de préférence mise en oeuvre lorsque l'aéronef fonctionne dans une étape de roulage, ce qui permet de ne pas utiliser la puissance de la turbomachine 12, voire de maintenir la turbomachine 12 à l'arrêt.

Cela permet, d'entrainer l'hélice 14 sans consommer de carburant, ni produire de gaz d'échappement. En outre, l'énergie électrique utilisée pour faire tourner l'hélice 14 n'est utilisée que lorsque cela est nécessaire, il n'y a donc pas de consommation excessive d'électricité.

Dans la description qui va suivre, on décrira plusieurs étapes de fonctionnement du groupe propulseur 10 comportant les moyens d'accouplement 20 qui viennent d'être décrits.

### Phase de roulage

On a représenté à la figure 2 la configuration du groupe propulseur 10 lorsque l'aéronef fonctionne dans une étape de roulage.

Comme on l'a dit précédemment, lors de cette étape de roulage, les moyens d'accouplement 20 accouplent uniquement la machine électrique tournante 16 avec l'hélice 14.

Dans cette configuration des moyens d'accouplement 20, le crabot 28 est dans un état désengagé pour lequel il n'accouple pas l'arbre 26 de l'organe de couplage 22 avec l'arbre 18 de la turbine libre. La machine électrique tournante 16 n'est donc pas accouplée avec la turbine libre de la turbomachine 12.

Le premier système d'embrayage 30 est en position embrayée, c'est-à-dire que les deux anneaux plans 34, 36 sont en contact l'un contre l'autre et le deuxième système d'embrayage 40 est en position débrayé, c'est-à-dire que les deux anneaux plans 44, 46 ne sont pas en contact l'un contre l'autre.

Aussi, dans cette configuration des moyens d'accouplement 20, la machine électrique tournante 16, fonctionne en mode démarreur, c'est-à-dire qu'elle produit une énergie motrice, cette énergie motrice est alors transmise uniquement à l'hélice par l'intermédiaire de l'organe de couplage 22 et du premier système d'embrayage 30.

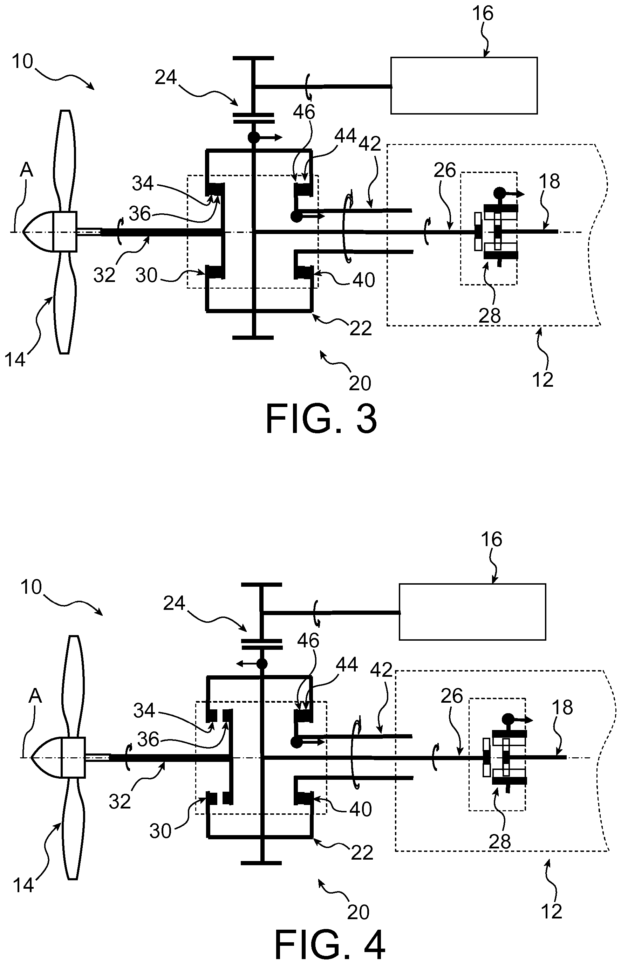

On a représenté aux figures 3 à 5 d'autres états du groupe propulseur 10 et de ses moyens d'accouplement 20, représentant les différentes phases de fonctionnement des moyens d'accouplement 20 lors d'une étape de démarrage de la turbomachine, qui est mise en oeuvre après l'étape de roulage.

Le démarrage de la turbomachine 12 consiste principalement à mettre le générateur de gaz en rotation jusqu'à ce qu'il atteigne un régime de fonctionnement de la turbomachine. A partir de ce régime de fonctionnement, la turbine libre produit une énergie motrice qui peut être transmise à l'hélice.

### Accouplement de l'hélice et de la machine électrique avec le générateur de gaz

Dans une première phase de l'étape de démarrage, qui a lieu immédiatement après la phase de roulage, le générateur de gaz est accouplé avec la machine électrique tournante 16 et avec l'hélice 14.

En effet, dans l'étape de roulage précédente, l'hélice 14 est en rotation à vitesse élevée. L'accouplement du générateur de gaz avec l'hélice 14 permet d'utiliser l'énergie cinétique emmagasinée par l'hélice 14 pour participer à l'entrainement du générateur de gaz.

Pour cela, comme on l'a représenté à la figure 3, le deuxième système d'embrayage 40 change d'état vers son état embrayé, c'est-à-dire que les deux anneaux plans 44, 46 sont mis en contact l'un contre l'autre. Le générateur de gaz est alors accouplé avec l'organe de couplage 22.

Le crabot 28 et le premier système d'embrayage 30 sont maintenus dans le même état que précédemment, c'est-à-dire que le crabot 28 est dans un état désengagé et le premier système d'embrayage 30 est en position embrayée.

La machine électrique tournante 16 fonctionne en mode production d'énergie motrice, cette énergie, ainsi que l'énergie cinétique de l'hélice 14 sont transmises au générateur de gaz pour démarrer la turbomachine 12.

### Accouplement de la machine électrique avec le générateur de gaz

Après un certain temps, l'énergie cinétique de l'hélice 14 devient insuffisante pour participer à l'entrainement du générateur de gaz pour démarrer la turbomachine 12. De plus, l'hélice 14 peut produire un couple résistant qui consommerait inutilement une certaine quantité d'énergie produite par la machine électrique tournante 16.

Cette configuration peut aussi être mise en oeuvre au début du démarrage de la turbomachine 12. Lorsque la phase de roulage décrite ci-dessus n'a pas eu lieu. L'hélice 14 est immobile, elle ne peut donc pas participer à entrainer le générateur de gaz.

A cet effet, comme on peut le voir à la figure 4, dans cette phase de l'étape de démarrage, l'hélice 14 est désaccouplée de la machine électrique tournante 16 et du générateur de gaz.

Pour cela, le premier système d'embrayage 30 change d'état vers son état débrayé, c'est-à-dire que les deux anneaux plans 34, 36 ne sont plus en contact l'un contre l'autre.

Par conséquent, lors de cette phase, la machine électrique tournante 16 est accouplée uniquement au générateur de gaz, toute l'énergie produite par la machine électrique tournante 16 est utilisée pour démarrer la turbomachine 12, il n'y a donc pas de perte d'énergie causée par le couple résistant de l'hélice 14.

### Accouplement de la turbine libre avec l'organe de couplage

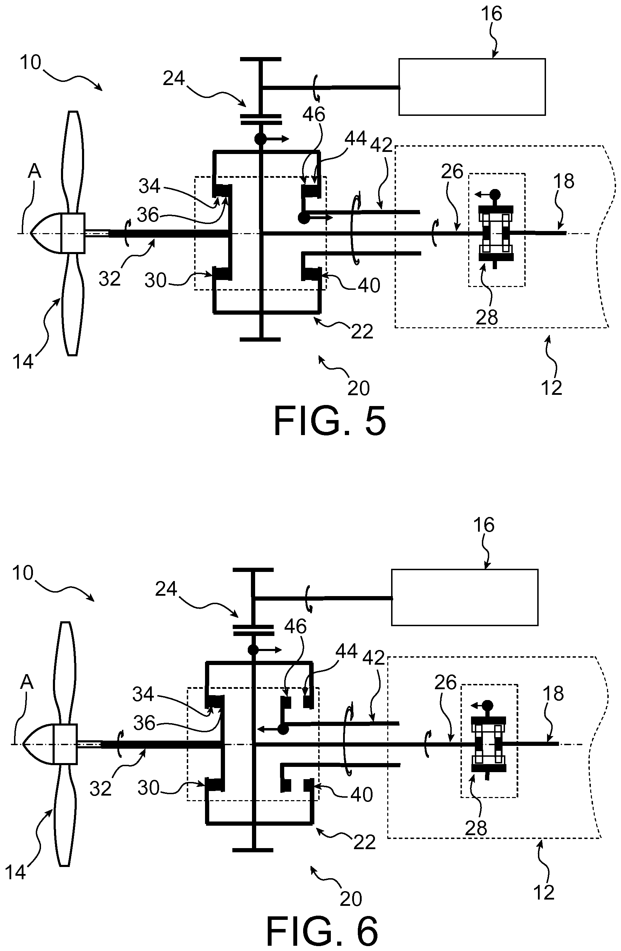

Ensuite, dans une troisième phase de l'étape de démarrage, que l'on a représenté à la figure 5, la turbomachine 12 est démarrée, la turbine libre est apte à produire une énergie motrice.

Selon cette phase, la machine électrique tournante 16 est accouplée à l'hélice 14, et à la turbine libre et elle est désaccouplée du générateur de gaz.

Pour cela, le premier système d'embrayage 30 change d'état vers son état embrayé, c'est-à-dire que les deux anneaux plans 34, 36 sont en contact l'un contre l'autre et l'hélice 14 est alors accouplée avec la machine électrique tournante 16 par l'intermédiaire de l'organe de couplage 22.

Le crabot 28 change aussi d'état vers son état engagé d'accouplement de l'arbre 18 de la turbine libre avec l'arbre 26 de l'organe de couplage 22, pour accoupler la machine électrique tournante 16 à la turbine libre.

Le deuxième système d'embrayage 40 est maintenu en position embrayé.

L'énergie produite par la turbine libre entraine l'hélice 14 et la machine électrique tournante 16, qui fonctionne alors en mode générateur d'électricité. Ainsi, le groupe propulseur 10 peut à la fois mettre en mouvement l'aéronef et produire de l'électricité qui est redistribuée dans l'ensemble de l'aéronef, y compris vers la batterie.

### Fonctionnement en régime permanent

On a représenté à la figure 6 l'état du groupe propulseur 10 lorsque la turbomachine 12 est en fonctionnement.

Cet état du groupe propulseur 10 correspond aux phases de décollage, de vol et d'atterrissage de l'aéronef.

Dans cet état du groupe propulseur 10, les moyens d'accouplement 20 réalisent l'accouplement de la machine électrique tournante 16 avec l'arbre 18 de la turbine libre et avec l'hélice. Par contre, dans cet état, les moyens d'accouplement 20 ne réalisent pas l'accouplement de la machine électrique tournante 16 avec le générateur de gaz.

Ici aussi, l'énergie produite par la turbine libre entraine l'hélice 14 et la machine électrique tournante 16 qui fonctionne en mode générateur d'électricité.

Pour cela, de manière similaire à l'état représenté à la figure 5, le premier système d'embrayage 30 est dans son état embrayé, c'est-à-dire que les deux anneaux plans 34, 36 sont en contact l'un contre l'autre et l'hélice 14 est accouplée avec la machine électrique tournante 16.

Le crabot 28 est dans son état engagé d'accouplement de l'arbre 18 de la turbine libre avec l'arbre 26 de l'organe de couplage 22, pour accoupler la machine électrique tournante 16 à la turbine libre.

Par contre, le deuxième système d'embrayage 40 est en position débrayé, c'est-à-dire que les deux anneaux plans 44, 46 ne sont pas en contact l'un contre l'autre, la machine électrique tournante 16 n'est donc pas accouplée au générateur de gaz.

Dans la description du groupe propulseur 10 qui a été faite, l'hélice 14 et son arbre 32 associé, l'arbre 18 de la turbine libre, l'organe de couplage 22, le crabot 28 et l'arbre 42 de générateur de gaz sont tous coaxiaux à l'axe principal A. il sera compris que l'invention n'est pas limitée à ce mode de réalisation et que l'axe principal d'un ou plusieurs de ces composants peut être décalé ou être incliné par rapport à l'axe principal A. Le groupe propulseur comportera alors des moyens de renvoi adaptés.

## Revendications

1. Groupe propulseur (10), notamment pour un aéronef, comportant
- une turbomachine (12) ;
- une hélice (14) apte à être accouplée de manière sélective avec ladite turbomachine (12) ;
- une machine électrique tournante (16) apte à entrainer au moins la turbomachine (12), et
- des moyens d'accouplement (20) sélectif de la machine électrique tournante (16) avec l'hélice (14) et/ou la turbomachine (12), qui sont arrangés de façon à pouvoir accoupler uniquement l'hélice (14) avec la machine électrique tournante (16) lors d'une étape de fonctionnement définie du groupe propulseur (10),
dans lequel la turbomachine (12) consiste en un turbomoteur à turbine libre, comportant un générateur de gaz et une turbine libre entraînée en rotation par le flux de gaz généré par le générateur de gaz,
**caractérisé en ce que** les moyens d'accouplement (20) sont arrangés de façon à pouvoir accoupler, ou non, la machine électrique tournante (16) Sélectivement avec le générateur de gaz et/ou la turbine libre.

2. Groupe propulseur (10) selon la revendication précédente, **caractérisé en ce que** les moyens d'accouplement (20) comportent un organe de couplage (22) qui est accouplé en permanence avec la machine électrique tournante (16) et un système d'embrayage (30) permettant l'accouplement sélectif de l'organe de couplage (22) avec l'hélice (14) en fonction de la phase de fonctionnement du groupe propulseur (10).

3. Groupe propulseur (10) selon la revendication 2, **caractérisé en ce que** les moyens d'accouplement (20) comportent un deuxième système d'embrayage (40) permettant l'accouplement sélectif de l'organe de couplage (22) avec le générateur de gaz.

4. Groupe propulseur (10) selon l'une des revendications 2 ou 3, **caractérisé en ce que** l'organe de couplage (22) porte un arbre (26), qui est apte à être accouplé avec la turbine libre par l'intermédiaire d'un crabot (28).

5. Groupe propulseur (10) selon l'une quelconque des revendications précédentes, **caractérisé en ce que** la machine électrique tournante (16) consiste en un alterno-démarreur, qui est apte à produire une énergie motrice pour entrainer l'hélice (14) et/ou la turbomachine (12) et qui est apte à produire de l'électricité à partir de l'énergie motrice produire par la turbomachine (12).

6. Groupe propulseur (10) selon la revendication précédente, **caractérisé en ce que** la machine électrique tournante (16) est raccordée à un accumulateur d'énergie électrique et la machine électrique tournante (16) est apte à prélever de l'électricité ou à alimenter en électricité ledit accumulateur d'énergie.

7. Procédé de contrôle des moyens d'accouplement (20) d'un groupe propulseur (10) selon l'une quelconque des revendications précédentes, en combinaison avec la revendication 2, monté sur un aéronef, **caractérisé en ce qu'**il consiste à commander les moyens d'accouplement pour que l'organe de couplage (22) soit accouplé uniquement avec l'hélice (14) lors d'une étape de roulage de l'aéronef sur une piste et pour que l'organe de couplage (22) soit accouplé avec l'hélice (14) et la turbomachine (12) au moins lors d'une étape de fonctionnement de la turbomachine (12) en régime établi.

8. Procédé de contrôle selon la revendication précédente, **caractérisé en ce que** lors d'une étape de démarrage de la turbomachine (12) suivant ladite étape de roulage, il comporte :
- une première phase dans laquelle l'organe de couplage (22) est accouplé simultanément avec l'hélice (14) et le générateur de gaz, et dans laquelle l'organe de couplage (22) est désaccouplé avec la turbine libre ;
- une deuxième phase dans laquelle l'organe de couplage (22) est accouplé uniquement avec le générateur de gaz et dans laquelle l'organe de couplage (22) est désaccouplé de l'hélice (14) et de la turbine libre et
- une troisième phase dans laquelle l'organe de couplage (22) est accouplé simultanément avec l'hélice (14), et la turbine libre

9. Procédé de contrôle des moyens d'accouplement (20) d'un groupe propulseur (10) selon l'une quelconque des revendications 1 à 6, en combinaison avec la revendication 2, **caractérisé en ce que** lors d'une étape de démarrage de la turbomachine (12), il comporte :
- une phase dans laquelle l'organe de couplage (22) est accouplé avec le générateur de gaz et dans laquelle l'organe de couplage (22) est désaccouplé de l'hélice (14) et de la turbine libre et
- une phase dans laquelle l'organe de couplage (22) est accouplé simultanément avec l'hélice (14), la turbine libre et dans laquelle l'organe de couplage est désaccouplé du générateur de gaz.

## Patentansprüche

1. Antriebseinheit (10), insbesondere für Luftfahrzeuge, bestehend aus
- einer Turbomaschine (12),
- einem Propeller (14), der geeignet ist, selektiv mit dieser Turbomaschine (12) gekoppelt zu werden,
- einer drehenden Elektromaschine (16), die geeignet ist, wenigstens die Turbomaschine (12) anzutreiben, und
- Mitteln zur selektiven Kopplung (20) der drehenden Elektromaschine (16) mit dem Propeller (14) und /oder der Turbomaschine (12), die dergestalt angeordnet sind, dass sie in einem bestimmten Betriebsstadium der Antriebseinheit (10) den Propeller (14) mit der drehenden Elektromaschine (16) allein koppeln können,
wobei die Turbomaschine (12) aus einem Turbotriebwerk mit Freifahrturbine besteht, das einen Gas-Generator und eine Freifahrturbine enthält, die durch den von dem Gas-Generator erzeugten Gasstrom in Drehung versetzt wird,
**dadurch gekennzeichnet,**
**dass** die Kopplungsmittel (20) dergestalt angeordnet sind, dass sie die drehende Elektromaschine (16) mit dem Gas-Generator und /oder der Freifahrturbine selektiv koppeln oder auch nicht koppeln können.

2. Antriebseinheit (10) nach dem vorherigen Anspruch,
**dadurch gekennzeichnet,**
**dass** die Kopplungsmittel (20) eine Kopplungseinrichtung (22) enthalten, die dauerhaft mit der drehenden Elektromaschine (16) gekoppelt ist, und ein Kupplungssystem (30) enthalten, das in Abhängigkeit von der Betriebsphase der Antriebseinheit (10) das selektive Koppeln der Kopplungseinrichtung (22) mit dem Propeller (14) ermöglicht.

3. Antriebseinheit (10) nach Anspruch 2,
**dadurch gekennzeichnet,**
**dass** die Kopplungsmittel (20) ein zweites Kupplungssystem (40) enthalten, das das selektive Koppeln der Kopplungseinrichtung (22) mit dem Gas-Generator ermöglicht.

4. Antriebseinheit (10) nach einem der Ansprüche 2 oder 3,
**dadurch gekennzeichnet,**
**dass** die Kopplungseinrichtung (22) eine Welle (26) stützt, die geeignet ist, über eine Klaue (28) mit der Freifahrturbine gekoppelt zu werden.

5. Antriebseinheit (10) nach einem der vorherigen Ansprüche,
**dadurch gekennzeichnet,**
**dass** die drehende Elektromaschine (16) aus einem Startergenerator besteht, der geeignet ist, eine Bewegungsenergie zu erzeugen, um den Propeller (14) und /oder die Turbomaschine (12) anzutreiben, und der geeignet ist, aus der von der Turbomaschine (12) erzeugten Bewegungsenergie elektrischen Strom zu erzeugen.

6. Antriebseinheit (10) nach dem vorherigen Anspruch,
**dadurch gekennzeichnet,**
**dass** die drehende Elektromaschine (16) mit einem Speicher für elektrische Energie verbunden ist und die drehende Elektromaschine (16) geeignet ist, elektrische Energie aus dem genannten Energiespeicher zu entnehmen oder diesem elektrische Energie zuzuführen.

7. Verfahren zur Steuerung der Kopplungsmittel (20) einer Antriebseinheit (10) nach einem der vorherigen Ansprüche in Kombination mit Anspruch 2, die in einem Luftfahrzeug eingebaut ist,
**dadurch gekennzeichnet,**
**dass** es darin besteht, die Kopplungsmittel zu steuern, damit in einem Rollstadium des Luftfahrzeugs auf einer Rollbahn die Kopplungseinrichtung (22) nur mit dem Propeller (14) gekoppelt ist, und damit zumindest in einem Betriebsstadium der Turbomaschine (12) in geregeltem Betrieb die Kopplungseinrichtung (22) mit dem Propeller (14) und der Turbomaschine (12) gekoppelt ist.

8. Steuerungsverfahren nach dem vorherigen Anspruch,
**dadurch gekennzeichnet,**
**dass** es in einem Anlass-Stadium der Turbomaschine (12) nach dem genannten Rollstadium beinhaltet:
- eine erste Phase, in der die Kopplungseinrichtung (22) zugleich mit dem Propeller (14) und dem Gas-Generator gekoppelt ist und in der die Kopplungseinrichtung (22) von der Freifahrturbine abgekoppelt ist,
- eine zweite Phase, in der die Kopplungseinrichtung (22) nur mit dem Gas-Generator gekoppelt ist und in der die Kopplungseinrichtung (22) von dem Propeller (14) und der Freifahrturbine abgekoppelt ist, und
- eine dritte Phase, in der die Kopplungseinrichtung (22) zugleich mit dem Propeller (14) und der Freifahrturbine gekoppelt ist.

9. Verfahren zur Steuerung der Kopplungsmittel (20) einer Antriebseinheit (10) nach einem der Ansprüche 1 bis 6 in Kombination mit Anspruch 2,
**dadurch gekennzeichnet,**
**dass** es in einem Anlass-Stadium der Turbomaschine (12) beinhaltet:
- eine Phase, in der die Kopplungseinrichtung (22) mit dem Gas-Generator gekoppelt ist und in der die Kopplungseinrichtung (22) von dem Propeller (14) und der Freifahrturbine abgekoppelt ist, und
- eine Phase, in der die Kopplungseinrichtung (22) zugleich mit dem Propeller (14), der Freifahrturbine gekoppelt ist und in der die Kopplungseinrichtung (22) von dem Gas-Generator abgekoppelt ist.

## Claims

1. Propulsion unit (10), particularly for an aircraft, comprising:
- a turbomachine (12);
- a propeller (14) that can be selectively coupled to said turbomachine (12);
- a rotary electrical machine (16) that can drive at least the turbomachine (12), and
- coupling means (20) selectively the rotary electric machine (16) to the propeller (14) and/or the turbomachine (12), that are arranged to be able of coupling the propeller (14) only to the rotary electrical machine (16) during a defined operation step of the propulsion unit (10),
in which the turbomachine (12) consists of a free turbine turboprop, comprising a gas generator and a free turbine driven in rotation by the gas flow generated by the gas generator,
**characterised in that** the coupling means (20) are arranged to be able of coupling or not coupling the rotary electrical machine (16) selectively to the gas generator and/or the free turbine.

2. Propulsion unit (10) according to the previous claim, **characterised in that** the coupling means (20) comprise a coupling device (22) that is permanently coupled to the rotary electrical machine (16) and a clutch system (30) for selective coupling of the coupling device (22) to the propeller (14) depending on the operating phase of the propulsion unit (10).

3. Propulsion unit (10) according to claim 2, **characterised in that** the coupling means (20) comprise a second clutch system (40), for selective coupling of the coupling device (22) to the gas generator.

4. Propulsion unit (10) according one of claims 2 or 3, **characterised in that** the coupling device (22) supports a shaft (26) that can be coupled to the free turbine through a dog clutch (28).

5. Propulsion unit (10) according to any one of the previous claims, **characterised in that** the rotary electrical machine (16) comprises an alternator-starter that can generate driving energy to drive the propeller (14) and/or the turbomachine (12) and that can generate electricity from the driving energy produced by the turbomachine (12).

6. Propulsion unit (10) according to the previous claim, **characterised in that** the rotary electrical machine (16) is connected to an electrical energy accumulator and the rotary electrical machine (16) is capable of drawing electricity from or supplying electricity to said energy accumulator.

7. Method of control over coupling means (20) of a propulsion unit (10) according to any one of the previous claims, in combination with claim 2, installed on an aircraft, **characterised in that** it consists of controlling the coupling means so that the coupling device (22) is coupled to the propeller (14) only during a taxiing step of the aircraft on a runway and so that the coupling device (22) is coupled to the propeller (14) and the turbomachine (12) at least during an operating step of the turbomachine (12) in steady state.

8. Method of control according to the previous claim, **characterised in that** during a start step of the turbomachine (12) following said taxiing step, it comprises :
- a first phase in which the coupling device (22) is coupled to the propeller (14) and the gas generator simultaneously, and in which the coupling device (22) is uncoupled from the free turbine;
- a second phase in which the coupling device (22) is coupled to the gas generator only, and in which the coupling device (22) is uncoupled from the propeller (14) and the free turbine, and
- a third phase in which the coupling device (22) is coupled to the propeller (14), and the free turbine simultaneously

9. Method of control over coupling means (20) of a propulsion unit (10) according to any one of claims 1 to 6, in combination with claim 2, installed on an aircraft, **characterised in that** during a step in which the turbomachine (12) is started, it comprises:
- a phase in which the coupling device (22) is coupled to the gas generator only, and in which the coupling device (22) is uncoupled from the propeller (14) and the free turbine, and
- a phase in which the coupling device (22) is coupled to the propeller (14) and the free turbine simultaneously, and in which the coupling device is uncoupled from the gas generator.
